# EUROPÄISCHE PATENTSCHRIFT

(11) **EP 4 037 803 B1**
(45) Veröffentlichungstag und Bekanntmachung des Hinweises auf die Patenterteilung: **07.01.2026**
(21) Anmeldenummer: 20775855.8
(22) Anmeldetag: 21.09.2020
(51) Int. Cl.: B01D 29/21

(54) **FLÜSSIGKEITSFILTER UND VOLUMENAUSGLEICHS-ELEMENT FÜR EINEN FLÜSSIGKEITSFILTER**
LIQUID FILTER AND VOLUME-EQUALIZING ELEMENT FOR A LIQUID FILTER
FILTRE À LIQUIDE ET ÉLÉMENT D'ÉGALISATION DE VOLUME POUR UN FILTRE À LIQUIDE

(30) Priorität: 30.09.2019 DE 102019215061
(43) Veröffentlichungstag der Anmeldung: 10.08.2022
(73) Patentinhaber: Robert Bosch GmbH, 70442 Stuttgart (DE)
(72) Erfinder: ARIAS ARIAS, Jose Luis, 28007 Madrid (ES)
(86) Internationale Anmeldenummer: PCT/EP2020/076234
(87) Internationale Veröffentlichungsnummer: WO 2021/063715

(56) Entgegenhaltungen:
- EP-A1- 3 517 751
- WO-A1-2017/025160
- WO-A1-2019/110361

## Beschreibung

### Gebiet der Erfindung

Die Erfindung betrifft einen Flüssigkeitsfilter und ein Volumenausgleichs-Element für einen Flüssigkeitsfilter

### Stand der Technik

Bei Flüssigkeitsfiltern kann es je nach Art der zu filternden Flüssigkeit vorkommen, dass die im Flüssigkeitsfilter befindliche Flüssigkeit bei Temperaturänderungen ihr spezifisches Volumen stark ändert und/oder einen anderen Aggregatzustand einnimmt und damit eine starke Volumenzunahme verbunden ist (z.B., wenn Wasser zu Eis gefriert). Dadurch kann die Gefahr bestehen, dass ein Gehäuse des Flüssigkeitsfilters durch die Volumenzunahme beschädigt wird.

Aus dem Stand der Technik ist daher bekannt, in Flüssigkeitsfiltern, z.B. für flüssige Harnstofflösungen zur katalytischen Reduktion von Stickoxiden im Automobilbereich (DENOX), im Innern des Gehäuses ein Volumenausgleichs-Element anzuordnen, welches nicht mit der Flüssigkeit gefüllt ist, sondern vielmehr elastisch verformbar ist. Bei einer Volumenzunahme der im Gehäuse befindlichen Flüssigkeit wird das Volumenausgleichselement durch das zusätzliche Volumen komprimiert und verhindert auf diese Weise einen übermäßigen Druckanstieg auf die Wände des Gehäuses.

Ein derartiges Volumenausgleichs-Element ist aus der DE 10 2017 203 796 A1 bekannt.

Aus der WO 2019/ 110361 A1 ist ein Flüssigkeitsfilter mit einem Filterelement bekannt, bei dem ein fluidischer Kurzschluss zwischen der Reinseite und der Rohseite (interne Abdichtung) durch eine Ringdichtung verhindert wird, die in einer Dichtungsnut einer Endkappe des Filterelements angeordnet ist.

### Offenbarung der Erfindung

Die Erfindung geht aus von der Erkenntnis, dass bei einem Flüssigkeitsfilter in dessen Inneren eine Reinseite von einer Rohseite getrennt ist, zwei Arten von Abdichtungen notwendig sind, um die Funktionalität des Flüssigkeitsfilters zu gewährleisten.

Die erste Dicht-Kategorie betrifft die externe Abdichtung, d.h. eine Abdichtung des Inneren des Flüssigkeitsfilters mit der darin befindlichen Flüssigkeit gegen einen Außenraum des Flüssigkeitsfilters. Diese externe Abdichtung ist unabhängig davon, ob die im Innern befindliche Flüssigkeit sich auf der (gefilterten) Reinseite oder der (ungefilterten) Rohseite befindet. Mit anderen Worten: der Flüssigkeitsfilter muss dicht sein, er darf keine Leckage nach außen aufweisen.

Die zweite Dicht-Kategorie betrifft die interne Abdichtung im Innern des Flüssigkeitsfilters. Im Innern ist üblicherweise ein Filtereinsatz angeordnet, durch den die zu filtrierende Flüssigkeit strömt und zwar von der Rohseite zu der Reinseite. Für eine effektive Filtrierung und damit Funktionsweise ist es wichtig, dass kein ungewollter fluidischen Kurzschluss zwischen der Rohseite und der Reinseite auftritt (Ausnahmen können Überdrucksituationen sein, die z.B. durch ein Überdruckventil abgefangen werden). Mit anderen Worten: es soll innerhalb des Innern keine ungefilterte Flüssigkeit am Filtereinsatz vorbei von der Rohseite zur Reinseite gelangen und umgekehrt auch keine gefilterte Flüssigkeit von der Reinseite zur Rohseite gelangen.

Die externe Abdichtung wird bei einem Flüssigkeitsfilter, der ein Gehäuse und einen Deckel aufweist, üblicherweise durch eine zwischen dem Gehäuse und dem Deckel angeordnete Gehäusedichtung, z.B. in Form eines separaten O-Rings bewirkt.

Für die interne Abdichtung ist üblicherweise vorgesehen, den Filtereinsatz gegen das Gehäuse abzudichten mittels zumindest einer ersten Filtereinsatzdichtung, z.B. in Form eines separaten O-Rings. Je nach Anordnung eines Zulaufs für die (ungereinigte) Flüssigkeit, eines Ablaufs für die (gereinigte) Flüssigkeit und der Art des Filterkonzepts (axiale oder radiale Durchströmung) kann auch eine zweite Filtereinsatzdichtung notwendig sein, z.B. in Form eines separaten O-Rings.

Es hat sich gezeigt, dass das Bereitstellen von mehreren verschiedenen Dichtmitteln, z.B. O-Ringen, sowie deren Montage beim Zusammenbau des Flüssigkeitsfilters kostenintensiv ist, die Logistik verkompliziert (z.B. bei der Lagerhaltung, der Bereitstellung von Ersatzteilen, etc.) und dass es zu Fehlern bei der Montage kommen kann, indem z.B. eines der Dichtmittel vergessen wird oder die verschiedenen Dichtmittel vertauscht werden. Durch die hohe Anzahl verschiedener Teile besteht das Risiko, dass der Flüssigkeitsfilter z.B. nach einer Wartung nicht funktional ist, da es eine Leckage nach außen gibt oder einen fluidischen Kurzschluss im Innern des Flüssigkeitsfilters. Bei Flüssigkeitsfiltern mit einem Volumenausgleichs-Element kommt dieses als zusätzlich bereitzuhaltendes, zu lagerndes und zu montierendes Element noch hinzu, was die Komplexität von Logistik, Lagerung und Montage zusätzlich erhöht. Darüber hinaus kann es schwierig sein, das Volumenausgleichs-Element an seinem vorgesehenen Platz im Filter auch beim Durchlaufen mehrerer Kompressions- und Dekompressions-Zyklen (z.B. Eisbildung mit Kompression des Volumenausgleichs-Element, Auftauen mit Dekompression des Volumenausgleichs-Elements) ortsfest zu sichern. Ist eine ortsfeste Sicherung nicht gegeben, so besteht das Risiko, dass das Volumenausgleichs-Element durch eine Lageänderung die interne oder externe Abdichtung oder Zulauf oder Ablauf oder den Filtereinsatz oder die darin bereits abgeschiedenen Partikel beeinträchtigt.

Es kann daher ein Bedarf bestehen, einen Flüssigkeitsfilter mit einem Volumenausgleichs-Element bereitzustellen, bei dem in zuverlässiger Art und Weise die externe Abdichtung und die interne Abdichtung dauerhaft sichergestellt ist, der einfach und mit wenigen Montageschritten zusammenzubauen und zu warten ist, bei dem die Anzahl der separat voneinander vorliegenden und miteinander zu montierender Teile gering gehalten ist und bei dem das Volumenausgleichs-Element zuverlässig und dauerhaft im Innern des Flüssigkeitsfilters im Wesentlichen ortsfest gehalten wird, so dass es die Funktionalitäten des Flüssigkeitsfilters nicht beeinträchtigt und auch keine bereits im Filtereinsatz abgeschiedenen Partikel wieder gelöst werden durch Bewegungen des Volumenausgleichs-Elements.

### Vorteile der Erfindung

Dieser Bedarf kann durch den Gegenstand der vorliegenden Erfindung gemäß der unabhängigen Ansprüche gedeckt werden. Vorteilhafte Ausführungsformen der vorliegenden Erfindung sind in den abhängigen Ansprüchen beschrieben.

Gemäß einem ersten Aspekt der Erfindung wird ein Flüssigkeitsfilter vorgeschlagen, der ein Gehäuse mit einem Deckel, einen Zulauf für eine Flüssigkeit und einen Ablauf für die Flüssigkeit sowie einen Filtereinsatz aufweist, wobei der Filtereinsatz in einem Inneren des Gehäuses angeordnet ist und eine dem Deckel zugewandte erste Endkappe, eine zweite Endkappe und ein in einer axialen Richtung zwischen den beiden Endkappen angeordnetes Filtermedium aufweist, wobei der Filtereinsatz eine Reinseite von einer Rohseite trennt. Der Flüssigkeitsfilter weist weiterhin auf ein Volumenausgleichs-Element mit einem elastisch-reversibel komprimierbaren Zentralkörper, der einen Zentralkörper-Innenraum aufweist. Der Zentralkörper-Innenraum umschließt in einem nicht-komprimierten Zustand ein Anfangsvolumen und in einem komprimierten Zustand ein Endvolumen. Dabei entspricht die Volumendifferenz zwischen Endvolumen und Anfangsvolumen zumindest 35% einer maximalen Volumenänderung der im Flüssigkeitsfilter befindlichen Flüssigkeit im Temperaturbereich zwischen +90°C und - 40°C bei Normaldruck, bevorzugt wenigstens 50% und besonders bevorzugt wenigstens 75% und ganz besonders bevorzugt wenigstens 90%. Alternativ oder zusätzlich ist das Anfangsvolumen wenigstens um 20% größer ist als das Endvolumen oder wenigstens um 30% größer ist als das Endvolumen, besonders bevorzugt wenigstens um 50% größer als das Endvolumen und ganz besonders bevorzugt wenigstens doppelt so groß wie das Endvolumen (also 100% größer als das Endvolumen). Das Volumenausgleichs-Element weist einen den Zentralkörper umlaufenden ersten Dichtungsbereich bzw. ersten Dichtbereich auf, wobei der erste Dichtungsbereich ausgebildet ist, im vollständig montierten Zustand des Flüssigkeitsfilters mit dem Gehäuse und dem Deckel derart zusammenzuwirken, dass das Innere des Gehäuses fluiddicht von einem Außenraum des Flüssigkeitsfilters abgedichtet ist. Das Volumenausgleiches-Element weist einen den Zentralkörper umlaufenden zweiten Dichtungsbereich bzw. zweiten Dichtebereich auf, wobei der zweite Dichtungsbereich ausgebildet ist, einen fluidischen Kurzschluss zwischen der Reinseite und der Rohseite zu verhindern. Der zweite Dichtungsbereich kann z.B. im zusammengebauten Zustand des Flüssigkeitsfilters im Bereich des Deckels angeordnet sein.

Dabei kann das Endvolumen z.B. als das Volumen definiert sein, welches vom Volumenausgleichs-Element eingenommen wird im vollständig durch die mögliche Flüssigkeitsvolumenänderung komprimierten Zustand.

Mit anderen Worten: das Volumenausgleichs-Element weist die Dichtmittel für die externe Abdichtung und zumindest teilweise die Dichtmittel bzw. einen Teil der Dichtmittel für die interne Abdichtung auf.

Dadurch kann vorteilhaft mittels des Volumenausgleichs-Elements eine Beschädigung des Gehäuses bei einer Volumenänderung der Flüssigkeit verhindert werden. Weiterhin können vorteilhaft zumindest zwei als separate Elemente ausgeführte Dichtmittel (z.B. O-Ringe) eingespart werden, ein Dichtmittel für die externe Abdichtung und ein Dichtmittel für die interne Abdichtung. Dies vereinfacht vorteilhaft die Logistik für die Bereitstellung aller notwendigen Teile des Flüssigkeitsfilters, vereinfacht die Lagerhaltung, erleichtert die Montage durch die Einsparung von Montageschritten für zwei separate Dichtmittel, erhöht die Zuverlässigkeit der Montage (z.B. bei Erstmontage oder nach einer Wartung), da ein Vergessen eines der eingesparten separaten Dichtmittel nicht möglich ist. Weiterhin vorteilhaft können im Flüssigkeitsfilter der herkömmliche Filtereinsatz und das herkömmliche Gehäuse und der herkömmliche Deckel weiterhin verwendet werden, wenn der erste Dichtungsbereich und/oder der zweite Dichtungsbereich am Volumenausgleichs-Element derart angeordnet sind, dass sie im montierten Zustand die Lage der ursprünglichen Dichtmittel für die externe und interne Dichtung einnehmen. Auf diese Weise wird vorteilhaft die Verwendung bereits vorhandener Elemente ermöglicht, so dass Kosten für Umkonstruktionen und Werkzeugkosten entfallen.

Der Ausdruck "aufweisen" ist im Kontext dieser Anmeldung synonym zum Ausdruck "umfassen" zu verstehen.

Der Zulauf kann z.B. für die zu filtrierende Flüssigkeit und der Ablauf kann z.B. für die gefilterte Flüssigkeit vorgesehen sein.

Unter der axialen Richtung ist eine Richtung entlang einer Längsachse des Flüssigkeitsfilters bzw. des Filtereinsatzes zu verstehen. Unter der radialen Richtung ist eine zur axialen Richtung senkrechte Richtung zu verstehen.

Der Filtereinsatz kann z.B. hohlzylindrisch ausgebildet sein, z.B. kreiszylindrisch. Er kann z.B. rotationssymmetrisch ausgebildet sein, wobei als Symmetrieachse die Längsachse dienen kann.

Das Volumenausgleichs-Element ist dazu eingerichtet, bei einer Änderung des Volumens der im Innern des Flüssigkeitsfilters eingeschlossenen Flüssigkeit komprimiert zu werden, und so einen Druckanstieg auf das Gehäuse und den Deckel zu reduzieren, so dass das Gehäuse-Deckel-Ensemble nicht beschädigt wird, z.B. beim Übergang von flüssigem Wasser zu Eis.

Der Zentralkörper kann z.B. als offener Hohlraum ausgestaltet sein, in den die Flüssigkeit, die sich im Flüssigkeitsfilter befindet, nicht eindringen kann. Der Zentralkörper kann jedoch auch als geschlossener Hohlraum ausgebildet sein. Der Zentralkörper kann elastisch-reversibel ausgestaltet sein, so dass er bei Nachlassen des Drucks (z.B. beim Schmelzen von Eis) wieder sein Anfangsvolumen einnimmt, gegebenenfalls sogar seine Ursprungsform. Im Hohlraum kann sich entweder Gas (Luft) befinden oder ein elastisch reversibel komprimierbarer Schaumstoff. Der Zentralkörper kann einen Großteil, z.B. mehr als 90%, der Volumenänderungs-Funktionalität des Volumenausgleichs-Elements übernehmen.

Das Volumenausgleichselement kann von innen nach außen betrachtet einen Innenabschnitt aufweisen, an den sich nach radial außen betrachtet ein Mittelabschnitt bzw. Verbindungsabschnitt anschließt an den wiederum sich nach radial außen betrachtet ein Außenabschnitt bzw. äußerer Endabschnitt anschließt. Der Zentralkörper kann z.B. im Innenabschnitt angeordnet sein. Im Mittelabschnitt bzw. Verbindungsabschnitt kann das Volumenausgleichs-Element z.B. ungefähr in radialer Richtung nach außen vom Zentralkörper abragen. Es kann dabei umlaufend geschlossen ausgebildet sein oder in der Art von Speichen oder Rippen vom Zentralkörper abragen. Es kann am Ende des Verbindungsabschnitts z.B. ungefähr entlang der axialen Richtung geführt sein. Im Außenabschnitt bzw. im äußeren Endabschnitt kann das Volumenausgleichs-Element z.B. entlang der radialen Richtung verlaufen.

Der erste Dichtungsbereich, der die externe Dichtung bewirkt, kann z.B. in radialer Richtung betrachtet weiter außen angeordnet sein als der zweite Dichtungsbereich.

Der zweite Dichtungsbereich kann z.B. entlang der axialen Richtung betrachtet weiter von einem oberen Ende des Zentralkörpers beabstandet sein als der erste Dichtungsbereich. Dabei kann in axialer Richtung betrachtet das obere Ende des Zentralkörper zwischen einer Oberseite des Deckels und dem zweiten Dichtungsbereich angeordnet sein.

Das Volumenausgleichs-Element kann z.B. rotationssymmetrisch ausgebildet sein. Dabei kann z.B. die Längsachse des Flüssigkeitsfilters als Symmetrieachse dienen. Die Längsachse des Flüssigkeitsfilters kann z.B. auch die Längsachse des Volumenausgleichs-Elements sein.

Dadurch, dass das Volumenausgleichs-Element einstückig ausgebildet ist kann es besonders kostengünstig hergestellt, transportiert, gelagert und montiert werden. Das Risiko einer Fehlmontage wird vorteilhaft verringert. Beispielsweise kann das Volumenausgleichs-Element mittels eines Spritzgussverfahrens hergestellt sein. Unter dem Ausdruck "einstückig" kann verstanden werden, dass das Volumenausgleichs-Element nicht zerstörungsfrei zerlegt werden kann. Beispielsweise kann in einem vom Zentralkörper umschlossenen Hohlraum ein kompressibles Element, z.B. ein Schaumstoffelement, angeordnet sein. Dieses kann Bestandteil eines einstückig ausgebildeten Volumenausgleichs-Elements sein, wenn ein solches kompressibles Element nicht aus dem Hohlraum entnommen werden kann ohne den Zentralkörper und/oder den Schaumstoffkörper zu zerstören.

Dadurch, dass das Volumenausgleichs-Element als vom Filtereinsatz separates Element ausgebildet ist kann das Volumenausgleichs-Element vorteilhaft bei einer Wartung einfach gewechselt werden. Dabei kann das Volumenausgleichs-Element zerstörungsfrei lösbar am bzw. im Innern des Flüssigkeitsfilters angeordnet sein. Bevorzugt ist das Volumenausgleichs-Element dabei nicht mit einem anderen Element des Flüssigkeitsfilters (z.B. dem Filtereinsatz oder dem Deckel oder dem Gehäuse) stoffschlüssig verbunden.

Dadurch, dass das Filtermedium einen Innenraum umschließt, wobei der Zentralkörper in den Innenraum des Filtermediums hineinragt wird vorteilhaft eine besonders platzsparende Ausführung des Volumenausgleichs-Elements bereitgestellt. Gleichzeitig wird dadurch vorteilhaft eine Beschädigung des den Innenraum umgebenden Filtermediums bei einer Volumenausdehnung der Flüssigkeit besonders wirksam verhindert.

Das Volumenausgleichs-Element kann z.B. entlang wenigstens 50% oder wenigstens 75% einer Länge des Innenraums entlang der axialen Richtung in den Innenraum hineinragen.

Alternativ oder zusätzlich kann das Volumenausgleichs-Element zumindest 5mm, bevorzugt mindestens 10mm in den Innenraum hineinragen.

Dabei kann sich der Innenraum z.B. zwischen den beiden dem Innenraum zugewandten Seiten der ersten Endkappe bzw. der zweiten Endkappe erstrecken.

Dadurch, dass die erste Endkappe eine kanalartige erste Öffnung aufweist, wobei der Zentralkörper durch die erste Öffnung hindurch in den Innenraum des Filtermediums hineinragt wird vorteilhaft bewirkt, dass das Volumenausgleichs-Element entlang der radialen Richtung ortsfest im Flüssigkeitsfilter gesichert ist. Außerdem wird dadurch eine präzise Montage des Volumenausgleichs-Elements begünstigt, da die erste Öffnung als eine Art Montagehilfe (Schlüssel-Schloss-Prinzip) wirkt.

Die erste Öffnung kann dabei als Durchgangsöffnung in der ersten Endkappe ausgebildet sein. Sie kann zentrisch in der ersten Endkappe angeordnet sein.

Es kann z.B. vorgesehen sein, dass der Zentralkörper im nicht komprimierten Zustand im Bereich der ersten Öffnung im Wesentlichen denselben Durchmesser aufweist wie die erste Öffnung.

Weiterhin kann z.B. vorgesehen sein, dass die zweite Endkappe eine kanalartige zweite Öffnung aufweist. Es kann beispielsweise vorgesehen sein, dass eine solche zweite Öffnung den Innenraum des Filtereinsatzes mit dem Zulauf oder mit dem Ablauf fluidleitend verbindet.

Dadurch, dass die erste Endkappe einen in Richtung des Deckels abragenden inneren Kragen aufweist, wobei das Volumenausgleichs-Element in axialer Richtung betrachtet zumindest abschnittsweise zwischen einem freien Ende des inneren Kragens und dem Deckel angeordnet ist wird vorteilhaft bewirkt, dass das Volumenausgleichs-Element im zusammengebauten Zustand des Flüssigkeitsfilters in axialer Richtung ortsfest gehaltert ist bzw. einen nur geringen axialen Bewegungsspielraum aufweist. Dadurch kann z.B. ein Losrütteln von im Filtermedium abgeschiedener Partikel durch ein sich bewegendes Volumenausgleichs-Element verhindert werden.

Das Volumenausgleichs-Element kann z.B. zwischen dem freien Ende des inneren Kragens und dem Deckel eingespannt sein. Dann ist es stets in mechanischem Kontakt mit dem freien Ende des inneren Kragens und dem Deckel. Auf diese Weise ist das Volumenausgleichs-Element besonders ortsfest gehaltert.

Das Volumenausgleichs-Element kann im Bereich des Verbindungsabschnitts zwischen dem freien Ende des inneren Kragens und dem Deckel angeordnet sein.

Der Innerer Kragen kann z.B. zentrisch auf der ersten Endkappe angeordnet sein. Der innere Kragen kann z.B. um die erste Öffnung herum angeordnet sein. Er kann die erste Öffnung z.B. vollständig, d.h. entlang einer Umlaufrichtung betrachtet unterbrechungsfrei, umschließen.

Der innere Kragen kann dabei z.B. auf einer vom Filtermedium abgewandter Seite der ersten Endkappe abragen.

Es kann z.B. vorgesehen sein, dass eine Innenwand des inneren Kragens in radialer Richtung betrachtet von einem Rand der ersten Öffnung beabstandet ist, z.B. mindestens 10% oder mindestens 20% des Öffnungsdurchmessers und/oder mindestens 3mm oder mindestens 5mm oder mindestens 8mm.

Dadurch, dass der erste Dichtungsbereich in einer radialen Richtung betrachtet in einem äußeren Endabschnitt des Volumenausgleichs-Elements angeordnet ist, wobei der erste Dichtungsbereich im montierten Zustand des Flüssigkeitsfilters in axialer Richtung und/oder in radialer Richtung zwischen dem Gehäuse und dem Deckel zusammengedrückt ist bzw. zusammengepresst ist bzw. verformt ist wird vorteilhaft die externe Dichtung auf eine einfache Art und Weise zuverlässig sichergestellt. Mit der Montage des Volumenausgleichs-Elements wird die externe Dichtung automatisch sichergestellt, das Vergessen des Dichtmittels für die externe Dichtung ist ausgeschlossen.

Dabei kann der erste Dichtungsbereich als Radialdichtung dienen, wenn er entlang der axialen Richtung zwischen Deckel und Gehäuse angeordnet ist. Er kann als radiale Dichtung wirken, wenn er in radialer Richtung zwischen Gehäuse und Deckel angeordnet ist. Es ist auch möglich, dass der erste Dichtungsbereich sowohl als axiale und als radiale Dichtung wirkt, wenn er z.B. auf einer zur axialen Richtung angeschrägten Fläche des Gehäuses angeordnet ist und vom Deckel gegen diese Fläche gepresst wird.

In einer Weiterbildung der Erfindung ist vorgesehen, dass die erste Endkappe einen in Richtung des Deckels abragenden äußeren Kragen aufweist, wobei der zweite Dichtungsbereich auf einer vom Deckel abgewandten unteren Seite des Volumenausgleichs-Elements angeordnet ist, wobei der zweite Dichtungsbereich im montierten Zustand des Flüssigkeitsfilters in axialer Richtung und/oder in radialer Richtung zwischen einer Gehäuse-Innenwand und einer Außenwand des äußeren Kragens zusammengedrückt bzw. zusammengepresst bzw. verformt ist.

Dadurch wird vorteilhaft bewirkt, dass die interne Abdichtung im Wesentlichen an einer Außenseite der ersten Endkappe erfolgt, wodurch eine geringe Krümmung bzw. ein großer Krümmungsradius des zweiten Dichtungsbereichs realisiert ist.

Dadurch wird vorteilhaft eine große Dichtfläche und eine Schonung des Materials bewirkt. Vorteilhaft kann vorgesehen sein, dass der zweite Dichtungsbereich ein Dichtmittel (z.B. einen O-Ring) für die herkömmliche interne Abdichtung ersetzt und so ein herkömmlich verwendeter Filtereinsatz weiterverwendet werden kann.

Der äußere Kragen ist radial weiter außen angeordnet als der innere Kragen, sofern dieser vorhanden ist. Der äußere Kragen kann den inneren Kragen umrunden bzw. umschließen, sofern dieser vorhanden ist.

Der äußere Kragen kann z.B. ein freies Ende aufweisen. Dieses kann z.B. im Wesentlichen entlang der axialen Richtung in Richtung des Deckels zeigen. Im Bereich des freien Endes kann z.B. eine nach radial außen abragende Kante vorgesehen sein. Diese Kante kann dabei z.B. nicht ganz so weit radial nach außen ragen wie die erste Endkappe. Es kann z.B. vorgesehen sein, dass eine Oberseite der Endkappe, ein radial nach außen weisender Teil einer Außenwand des äußeren Kragens und eine vom Deckel wegweisende Wandseite der Kante eine Nut ausbilden. Es kann z.B. vorgesehen sein, dass der zweite Dichtungsbereich in der Nut angeordnet ist. Es kann z.B. vorgesehen sein, dass eine Gehäuseinnenwand im Bereich der Nut einen Rücksprung aufweist. Dieser Rücksprung bzw. erste Rücksprung kann z.B. dazu dienen, den zweiten Dichtungsbereich zwischen der Gehäuseinnenwand und der Kante hindurchzuführen und in der Nut anzuordnen. Der Rücksprung oder ein weiterer Rücksprung der Gehäusewand (axial weiter vom Deckel beabstandet als der Rücksprung bzw. erste Rücksprung) kann auch eine gehäuseseitige Auflagefläche bzw. Dichtfläche für den zweiten Dichtungsbereich bilden bzw. eine interne Dichtstrecke für die interne Abdichtung verlängern und dadurch die interne Abdichtung verbessern.

Es kann vorgesehen sein, dass das freie Ende des inneren Kragens entlang der axialen Richtung betrachtet einen größeren Abstand von der ersten Endkappe aufweist als das freies Ende des äußeren Kragens. Der innere Kragen kann also den äußeren Kragen überragen in axialer Richtung.

Der zweite Dichtungsbereich kann in radialer Richtung betrachtet z.B. in einem äußeren Endabschnitt des Volumenausgleichs-Elements angeordnet sein. Er kann z.B. vollständig auf der vom Deckel abgewandter Seite des Volumenausgleichs-Elements angeordnet sein.

Je nach Ausbildung der Dichtflächen an der Gehäuse-Innenwand und der Außenwand des äußeren Kragens kann eine axiale, radiale oder gemischt axial-radiale Dichtwirkung dargestellt werden. Eine zumindest teilweise radiale Dichtwirkung kann dabei besonders vorteilhaft sein, da hierbei bereits durch die Konstruktion von Gehäuse, Filtereinsatz und Volumenausgleichs-Element diese Dichtwirkung mittels einer Presspassung bewirkt werden kann, ohne dass axialer Druck z.B. mittels Verschraubung des Deckels angewendet werden muss.

In einer Weiterbildung der Erfindung ist vorgesehen, dass der zweite Dichtungsbereich im montierten Zustand des Flüssigkeitsfilters in axialer Richtung und/oder in radialer Richtung zwischen einer Deckel-Innenwand und einer Außenwand des inneren Kragens zusammengedrückt bzw. zusammengepresst ist bzw. verformt ist.

Dabei kann der Deckel in einer Kontaktzone mit dem zweiten Dichtungsbereich z.B. schräg zur axialen Richtung verlaufen, z.B. in einem Winkel zur axialen Richtung zwischen 20° und 70°, bevorzugt zwischen 35° und 60°.

Dadurch wird eine besonders leichte, einfache und wenig kraftaufwendige Montage bzw. Demontage des Filtereinsatzes ermöglicht, da der zweite Dichtbereich bzw. der zweite Dichtungsbereich bei der Montage nicht zwischen dem Filtereinsatz und der Gehäuseinnenwand zur Anlage kommt und so keine Reibung beim Einsetzen bzw. Herausnehmen des Filtereinsatzes ins Gehäuse überwunden werden muss. Die interne Abdichtung im Bereich des Deckels kann vorteilhaft durch die axiale Lage des Deckels relativ zum Gehäuse präzise eingestellt werden. Wird der Deckel z.B. am Gehäuse verschraubt, so kann durch ein stärkeres Zuschrauben die Verpressung des zweiten Dichtungsbereichs erhöht werden und damit die Dichtwirkung. Eine radiale Dichtwirkung kann durch die Ausgestaltung der Kontaktzone des zweiten Dichtungsbereichs mit der Außenwandung des äußeren Kragens und der Formgebung des äußeren Kragens im Bereich dieser Kontaktzone eingestellt werden bzw. durch die Ausgestaltung des Deckels in der Kontaktzone mit dem zweiten Dichtungsbereich.

Dabei kann z.B. der zweite Dichtungsbereich das Volumenausgleichs-Element z.B. im Verbindungsabschnitt angeordnet sein.

Der innere Kragen kann in der Kontaktzone zum zweiten Dichtungsbereich an seiner Außenseite einen Rücksprung oder eine Nut entlang der radialen Richtung aufweisen, der als Auflagefläche bzw. Dichtungsfläche für den zweiten Dichtungsbereich dient.

An der Außenwand des inneren Kragens kann eine Art Schulter ausgebildet sein, die radial nach außen abragt und auf der der zweite Dichtungsbereich zumindest abschnittsweise aufliegen kann.

In einer Weiterbildung der Erfindung ist vorgesehen, dass der zweite Dichtungsbereich von dem Zentralkörper des Volumenausgleichs-Elements radial nach außen abragt, wobei der zweite Dichtungsbereich von einem dem Deckel zugewandten oberen Ende des Zentralkörpers in axialer Richtung beabstandet ist, wobei der zweite Dichtungsbereich im montierten Zustand des Flüssigkeitsfilters gegen eine Innenwand des inneren Kragens und/oder gegen eine dem Deckel zugewandte Oberseite der ersten Endkappe gedrückt bzw. gepresst ist.

Dabei kann z.B. vorgesehen sein, dass der zweite Dichtungsbereich von dem oberen Ende des Zentralkörpers in axialer Richtung z.B. um wenigstens 75% eines Abstands zwischen dem Deckel und der ersten Endkappe beabstandet ist.

Dadurch wird vorteilhaft bewirkt, dass der erste Dichtungsbereich zur externen Abdichtung und der zweite Dichtungsbereich zur internen Abdichtung räumlich deutlich voneinander getrennt ausgebildet sind. Dadurch könnte z.B. der zweite Dichtungsbereich mit einfachen Mitteln aus einem anderen Material hergestellt werden als der erste Dichtungsbereich, z.B. durch einen Zweikomponenten-Spritzgussprozess. Weiterhin vorteilhaft wirkt auf diese Weise der zweite Dichtungsbereich als Stoppelement und axiale Positionierhilfe bei der Montage des Volumenausgleichs-Elements im Filtereinsatz. Bei der Montage kann das Volumenausgleichs-Element einfach solange in axialer Richtung zum Filtereinsatz hin gedrückt werden, bis der zweite Dichtungsbereich in Anlage mit der Oberseite der ersten Endkappe gelangt. Dadurch ist auf einfache Weise eine reproduzierbare und präzise axiale Lage des Volumenausgleiches-Elements einstellbar, wodurch die richtige Funktion des Flüssigkeitsfilters auch bei schwierigen Einbausituationen stets gewährleistet ist.

Weiterhin vorteilhaft kann auf diese Weise eine besonders große Dichtfläche erzielt werden für die innere bzw. interne Dichtung bzw. Abdichtung sowie eine besonders zuverlässige Verhinderung eines fluidischen Kurzschlusses zwischen Reinseite und Rohseite. Schließlich kann der zweite Dichtungsbereich auf diese Weise als eine Art Sicherheitsventil dienen für den Fall, dass ein plötzlicher Druckstoß in Richtung des Innenraums des Filtermediums auftritt (z.B. bei bereits vollständig komprimiertem Volumenausgleichs-Element). In diesem Fall kann z.B. der zweite Dichtungsbereich derart ausgebildet sein, dass er bei Übersteigen einer einstellbaren Druckspitze die erste Öffnung freigibt und so einen raschen Druckabbau in Richtung des Deckels ermöglicht. Eine Beschädigung des Filtermediums kann dadurch vorteilhaft verhindert werden.

Dadurch, dass der erste Dichtungsbereich als elastische Dichtlippe oder elastischer Dichtwulst ausgebildet ist wird vorteilhaft eine besonders gute externe Dichtwirkung erzielt.

Dabei kann ein Dichtwulst durch eine im Vergleich zu angrenzenden Bereichen größere Materialstärke ausgebildet sein. Eine Dichtlippe kann durch eine besonders flexible Formgebung gestaltet sein.

Dadurch, dass der zweite Dichtungsbereich als elastische Dichtlippe oder elastischer Dichtwulst ausgebildet ist wird vorteilhaft eine besonders gute interne Dichtwirkung erzielt.

Der erste Dichtungsbereich und/oder der zweite Dichtungsbereich können z.B. aus einem elastischen Material gebildet sein bzw. aus einem Elastomer. Der erste Dichtungsbereich und/oder der zweite Dichtungsbereich können z.B. zumindest ein Material aufweisen aus der Gruppe: Gummi, Kautschuk, Silikon, Fluorelastomere, Ethylen- und Propylen-Monomere, Copolymere aus Butadien und Acrylnitril, Neopren.

Gemäß einem zweiten Aspekt der Erfindung wird ein Volumenausgleichs-Element vorgeschlagen.

Das Volumenausgleichs-Element ist eingerichtet zur Montage in einem Flüssigkeitsfilter, der eine Reinseite von einer Rohseite trennt. Das Volumenausgleichs-Element weist einen elastisch-reversibel komprimierbaren Zentralkörper mit einem Zentralkörper- Innenraum auf. Der Zentralkörper-Innenraum umschließt in einem nicht-komprimierten Zustand ein Anfangsvolumen und in einem komprimierten Zustand ein Endvolumen, wobei das Anfangsvolumen wenigstens um 20% größer ist als das Endvolumen oder wenigstens um 30% größer ist als das Endvolumen, *besonders bevorzugt wenigstens um 50% größer als das Endvolumen und ganz besonders bevorzugt wenigstens doppelt so groß wie das Endvolumen (also 100% größer als das Endvolumen).* Das Volumenausgleichs-Element weist einen den Zentralkörper umlaufenden ersten Dichtungsbereich auf, wobei der erste Dichtungsbereich ausgebildet ist, ein Inneres des Flüssigkeitsfilters fluiddicht von einem Außenraum des Flüssigkeitsfilters abzudichten, wobei das Volumenausgleiches-Element einen den Zentralkörper umlaufenden zweiten Dichtungsbereich aufweist, wobei der zweite Dichtungsbereich ausgebildet ist einen fluidischen Kurzschluss zwischen der Reinseite und der Rohseite zu verhindern.

Dadurch können vorteilhaft zumindest zwei als separate Elemente ausgeführte Dichtmittel (z.B. O-Ringe) in ein einziges Element integriert werden. Dies vereinfacht vorteilhaft die Logistik für die Bereitstellung aller notwendigen Teile eines Flüssigkeitsfilters, vereinfacht die Lagerhaltung, erleichtert die Montage durch die Einsparung der Montage zweier separater Dichtmittel und erhöht die Zuverlässigkeit der Montage (z.B. bei Erstmontage oder nach einer Wartung), da ein Vergessen eines Dichtmittels nicht möglich ist.

### Zeichnungen

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

Es zeigen
- Fig. 1:: einen schematischen Querschnitt eines Flüssigkeitsfilters aus dem Stand der Technik;
- Fig. 2a:: einen schematischen Querschnitt eines Flüssigkeitsfilters;
- Fig. 2b:: ein Detail der inneren und äußeren Abdichtung des Flüssigkeitsfilters aus Fig. 2a;
- Fig. 2c:: eine geschnittene perspektivische Ansicht des Volumenausgleichs-Elements aus Fig. 2a;
- Fig. 3a:: einen schematischen Querschnitt eines weiteren Flüssigkeitsfilters;
- Fig. 3b:: ein Detail der inneren und äußeren Abdichtung des Flüssigkeitsfilters aus Fig.3a;
- Fig. 3c:: eine geschnittene perspektivische Ansicht eines Volumenausgleichs-Elements für einen Flüssigkeitsfilter gemäß Fig. 3a;
- Fig. 4a:: einen schematischen Querschnitt eines weiteren Flüssigkeitsfilters;
- Fig. 4b:: ein Detail der inneren und äußeren Abdichtung des Flüssigkeitsfilters aus Fig. 4a;
- Fig. 4c:: eine geschnittene perspektivische Ansicht eines Volumenausgleichs-Elements für einen Flüssigkeitsfilter aus Fig. 4a.

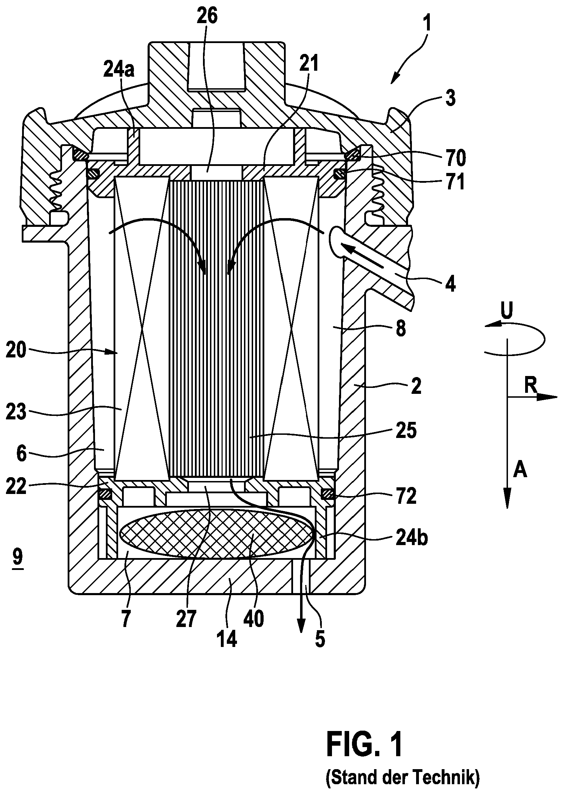

**Figur 1** zeigt einen schematischen Querschnitt eines Flüssigkeitsfilters 1 aus dem Stand der Technik.

Der Flüssigkeitsfilter 1 weist ein Gehäuse 2 mit einem Deckel 3, einen Zulauf 4 für eine Flüssigkeit und einen Ablauf 5 für die Flüssigkeit sowie einen Filtereinsatz 20 auf. Der Filtereinsatz 20 ist in einem Inneren 6 des Gehäuses 2 angeordnet und weist eine dem Deckel 3 zugewandte erste Endkappe 21, eine zweite Endkappe 22 und ein in einer axialen Richtung A zwischen den beiden Endkappen 21, 22 angeordnetes Filtermedium 23 auf. Die zweite Endkappe 22 weist dabei einem Boden 14 des hier becherartig ausgebildeten Gehäuses 2 zu. Die Schwerkraftrichtung kann dabei beispielsweise vom Deckel 3 zum Boden 14 zeigen. Der Filtereinsatz 20 trennt eine Reinseite 7, auf welcher gefilterte Flüssigkeit vorliegt, von einer Rohseite 8, auf der sich die zu filternde Flüssigkeit befindet. Die erste Endkappe 21 weist eine kanalartige erste Öffnung 26 auf. Die zweite Endkappe 22 weist eine kanalartige zweite Öffnung 27 auf. Der Filtereinsatz 20 ist hier hohlzylindrisch ausgebildet und umschließt einen Innenraum 25 zwischen der ersten Endkappe 21 und der zweiten Endkappe 22. Die erste Endkappe 21 weist ein erstes Stützelement 24a auf, welches zum Deckel 3 abragt. Die zweite Endkappe 22 weist ein zweites Stützelement 24b auf, welches zu einem Boden des Gehäuses hin abragt (in der Figur unten). Mittels der beiden Stützelemente 24a, 24b ist der Filtereinsatz 20 zwischen dem Deckel 3 und dem Boden eingespannt und somit entlang der axialen Richtung A im Wesentlichen ortsfest festgelegt. In

**Figur 1** ist unter dem Filtereinsatz 20 ein Volumenausgleichs-Element 40 angeordnet, welches elastisch-reversibel komprimierbaren ist zwischen einem Anfangsvolumen und einem Endvolumen: Es kann bei einer Volumenänderung der im Inneren 6 befindlichen Flüssigkeit das zusätzliche Volumen dadurch aufnehmen, dass es ausgehend vom Anfangsvolumen komprimiert wird. Dadurch wird eine Druckbelastung des Gehäuses 2 und des Deckels 3 verringert.

Die externe Abdichtung zwischen dem Inneren 6 und einem Außenraum 9 des Flüssigkeitsfilters 1 wird durch eine hier z.B. als separater O-Ring ausgebildete Gehäusedichtung 70 verwirklicht.

Die interne Abdichtung zwischen Rohseite 8 und Reinseite 7 erfolgt durch eine erste Filtereinsatzdichtung 71 und eine zweite Filtereinsatzdichtung 72, die an der radialen Außenseite der ersten Endkappe 21 bzw. zweiten Endkappe 22 angeordnet sind und die beiden Endkappen 21, 22 gegen das Gehäuse 2 in Art einer Radialdichtung abdichten.

Die axiale Richtung A erstreckt sich hier entlang der Längsachse des Flüssigkeitsfilters 1 bzw. des Filtereinsatzes 20. Eine radiale Richtung R erstreckt sich senkrecht zur axialen Richtung A. Eine Umlaufrichtung U umläuft die axiale Richtung A.

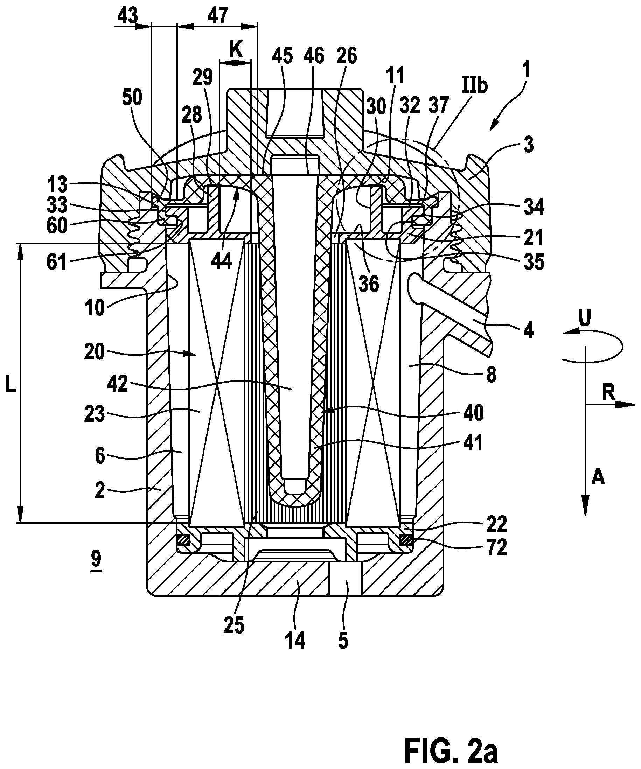

**Figur 2a** zeigt einen schematischen Querschnitt eines Flüssigkeitsfilters 1.

Im Unterschied zu dem Flüssigkeitsfilter 1 aus **Figur 1** weist der in **Fig. 2a** dargestellt Flüssigkeitsfilter 1 ein Volumenausgleichs-Element 40 auf, welches einen elastisch-reversibel komprimierbaren Zentralkörper 41 mit einem Zentralkörper-Innenraum 42 aufweist. Der Zentralkörper-Innenraum 42 umschließt in einem nicht-komprimierten Zustand ein Anfangsvolumen und umschließt in einem komprimierten Zustand ein Endvolumen. Die Volumendifferenz zwischen Endvolumen und Anfangsvolumen entspricht dabei zumindest 35% einer maximalen Volumenänderung der im Flüssigkeitsfilter 1 befindlichen Flüssigkeit im Temperaturbereich zwischen +90°C und -40°C bei Normaldruck. Alternativ oder zusätzlich ist vorgesehen, dass das Anfangsvolumen wenigstens um 20% größer ist als das Endvolumen oder wenigstens um 30% größer ist als das Endvolumen, *besonders bevorzugt wenigstens um 50% größer als das Endvolumen und ganz besonders bevorzugt wenigstens doppelt so groß wie das Endvolumen (also 100% größer als das Endvolumen).* Das Volumenausgleichs-Element 40 weist einen den Zentralkörper 41 umlaufenden ersten Dichtungsbereich 50 auf, wobei der erste Dichtungsbereich 50 ausgebildet ist, das Innere 6 des Flüssigkeitsfilters 1 fluiddicht von dem Außenraum 9 des Flüssigkeitsfilters 1 abzudichten - der erste Dichtungsbereich 50 trägt also zur externen Abdichtung des Flüssigkeitsfilters 1 bei bzw. stellt diese sicher. Das Volumenausgleiches-Element 40 weist weiterhin einen den Zentralkörper 41 umlaufenden zweiten Dichtungsbereich 60 auf, wobei der zweite Dichtungsbereich 60 ausgebildet ist, einen fluidischen Kurzschluss zwischen der Reinseite 7 und der Rohseite 8 zu verhindern - der zweite Dichtungsbereich trägt also zur internen Abdichtung des Flüssigkeitsfilters 1 bei bzw. stellt diese sicher, zumindest im Bereich des Deckels 3. Im Bereich des Bodens 14 des Gehäuses 2 ist in dieser Ausführungsform noch die zweite Filtereinsatzdichtung 72 vorgesehen, um die interne Abdichtung zu komplettieren.

In einer anderen (hier nicht dargestellten) Ausführungsform, bei der der Zulauf 4 über den Deckel 3 erfolgt, kann z.B. die untere Endkappe 22 ohne zweite Öffnung 27 gestaltet sein. Die Flüssigkeit kann dann z.B. vom Innenraum 25 in den Raum zwischen Filtereinsatz 20 und Gehäuse 2 fließen und den Flüssigkeitsfilter 1 über den Ablauf 5 verlassen. In diesem Fall könnte die zweite Filtereinsatzdichtung 72 entfallen und das Volumenausgleichs-Element 40 mit seinen beiden Dichtungsbereichen 50, 60 alleine die externe und interne Abdichtung bewirken.

Das Volumenausgleichs-Element 40 ist im dargestellten Ausführungsbeispiel lediglich beispielhaft im Wesentlichen rotationssymmetrisch ausgebildet.

In radialer Richtung R betrachtet kann das Volumenausgleichs-Element 40 vom Zentrum her betrachtet in folgende Abschnitte bzw. Bereiche gegliedert werden: Im Zentrum ist der Zentralkörper 41 angeordnet, der sich becherartig entlang der axialen Richtung A von einem oberen Ende 46 einer Oberseite 45 des Volumenausgleichs-Elements 40 nach unten erstreckt. Der Zentralkörper 41 übernimmt funktionell den größten Teil des Volumenausgleichs. Die Oberseite 45 ist zunächst flächig ausgebildet und erstreckt sich von der Öffnung des becherartigen Zentralkörpers 41 ungefähr in radialer Richtung R nach außen. Dieser Abschnitt kann als Verbindungsabschnitt 47 bzw. Mittelabschnitt bezeichnet werden. Er dient dazu, den Zentralkörper 41 zumindest mit dem ersten Dichtungsbereich 50 zu verbinden.

An den Verbindungsbereich 47 schließt sich radial weiter außen ein Außenabschnitt bzw. Außenbereich bzw. äußerer Endbereich 43 an. In dem äußeren Endbereich 43, der sich bis zum radialen Ende des Volumenausgleichs-Elements 40 erstreckt, ist hier der erste Dichtungsbereich 50 angeordnet. Der äußere Endbereich vereinigt hier die Dichtungsfunktionalität des Volumenausgleichs-Elements. Somit sind die beiden Funktionalitäten (Volumenausgleich und Abdichtung) in diesem Ausführungsbeispiel räumlich in radialer Richtung getrennt, wodurch z.B. die Materialstärken vorteilhaft an die jeweiligen Funktionalitäten angepasst werden können.

Der Verbindungsbereich 47 kann als geschlossene Fläche ausgestaltet sein, er kann jedoch auch speichenförmig bzw. in der Art von Verbindungsrippen gestaltet sein und dient dazu, den Zentralkörper 41 mit dem äußeren Endbereich 43 zu verbinden.

Das Volumenausgleichs-Element 30 ist in diesem Ausführungsbeispiel lediglich beispielhaft einstückig ausgebildet, d.h. der Zentralkörper 41, der erste Dichtungsbereich 50 und der zweite Dichtungsbereich 60 sind nicht zerstörungsfrei voneinander zu trennen. Sie können z.B. in einem Spritzgussprozess hergestellt sein.

Das Volumenausgleichs-Element 30 ist hier lediglich beispielhaft als vom Filtereinsatz 20 separates Element ausgebildet und nicht stoffschlüssig mit diesem verbunden.

Der Zentralkörper 41 ragt in den Innenraum 25 des Filtermediums 23 hinein. In diesem Ausführungsbeispiel ist das Volumenausgleichs-Element 40 in einem Zwischenraum zwischen Deckel 2 und der ersten, oberen Endkappe 21 angeordnet. Der Zentralkörper 41 ragt dabei durch eine kanalartige erste Öffnung 26 in der ersten Endkappe 21 hindurch in den Innenraum 25 des Filtermediums 23 hinein.

Der Zentralkörper 41 ragt dabei entlang ca. 80% bis 90% einer Länge L des Innenraums 25 entlang der axialen Richtung A in den Innenraum 25 hinein. Die Länge L entspricht dabei z.B. der Entfernung zwischen den beiden Endkappen 21, 22 entlang der axialen Richtung A betrachtet.

Die erste Öffnung 26 kann z.B. zentrisch in der ersten Endkappe 21 angeordnet sein.

Die erste Endkappe 21 weist einen in Richtung des Deckels 3 abragenden inneren Kragen 28 auf. Dieser innere Kragen 28 umschließt bzw. umgibt bzw. umrundet hier die erste Öffnung 26. Eine Innenwand 30 des inneren Kragens 28 ist dabei von einem Rand der ersten Öffnung 26 beabstandet angeordnet. Dieser Kragenabstand K entspricht hier z.B. ungefähr dem halben Durchmesser der ersten Öffnung 26. Der Kragenabstand K kann z.B. wenigstens 3mm oder wenigstens 5mm betragen.

Dabei ist das Volumenausgleichs-Element 40 in axialer Richtung A betrachtet zumindest abschnittsweise zwischen einem freien Ende 29 des inneren Kragens 28 und dem Deckel 3 angeordnet. Es kann zwischen dem freien Ende 29 und dem Deckel 3 eingespannt sein, wodurch eine axiale und/oder auch eine radiale Fixierung bzw. Einengung des Bewegungsspielraums des Volumenausgleichs-Elements 40 bewirkt wird.

Der erste Dichtungsbereich 50 ist in radialen Richtung R betrachtet in dem äußeren Endabschnitt 43 des Volumenausgleichs-Elements 40 angeordnet, wobei der erste Dichtungsbereich 50 in axialer Richtung A und/oder in radialer Richtung R zwischen dem Gehäuse 2 und dem Deckel 3 zusammengedrückt ist. Im dargestellten Ausführungsbeispiel weist eine Gehäuseinnenwand 10 des Gehäuses 2 in dem Bereich, in dem der erste Dichtungsbereich 50 an der Gehäuseinnenwand 10 anliegt, einen Rücksprung 13 auf. Auf diesem Rücksprung 13 mit einer annährend waagerechten bzw. leicht schrägen Auflagefläche liegt ein als erster Dichtungsbereich 50 ausgebildeter Dichtungswulst auf. Der Deckel 3 weist eine ins Innere 6 des Gehäuses 2 eingreifende Kante auf, die von oben kommend den ersten Dichtungsbereich 50 leicht schräg nach radial außen gegen den Rücksprung 13 drückt beim Zuschrauben des Deckels 3 und den ersten Dichtungsbereich 50 so zwischen Deckel 3 und Gehäuse-Innenwand 10 zusammenpresst. Dadurch wird die externe Abdichtung hergestellt. Der erste Dichtungsbereich 50 kann beispielsweise auch als Dichtlippe oder Dichtschnur ausgebildet sein oder eine andere Gestalt aufweisen, die eine externe Abdichtung des Flüssigkeitsfilters 1 bewirkt.

Die erste Endkappe 21 weist einen in Richtung des Deckels 3 abragenden äußeren Kragen 32 auf, wobei der zweite Dichtungsbereich 60 auf einer vom Deckel 3 abgewandten unteren Seite 44 des Volumenausgleichs-Elements 40 angeordnet ist, wobei der zweite Dichtungsbereich 60 im montierten Zustand des Flüssigkeitsfilters 1 in axialer Richtung A und/oder in radialer Richtung R zwischen der Gehäuse-Innenwand 10 und einer Außenwand 33 des äußeren Kragens 32 zusammengedrückt ist.

Der zweite Dichtungsbereich 60 ist hier als Dichtwulst ausgestaltet und ragt L-förmig von der unteren Seite 44 des Volumenausgleichs-Elements 40 ab, wobei der waagerechte Teil der "L"-Form nach radial innen gerichtet ist.

Im dargestellten Ausführungsbeispiel ragt von einem freien Ende 37 des äußeren Kragens 32 eine Kante 34 in radialer Richtung R ab. Diese Kante 34 bildet mit einer Außenwand 33 des äußeren Kragens 32 und einer dem Deckel 3 zugewandten Oberseite 36 der ersten Endkappe 21 eine Nut 35. Der als Dichtwulst ausgebildete zweite Dichtungsbereich 60 ist in der Nut 35 aufgenommen. Der senkrechte Teil der "L"-Form ist außen an der Kante 34 vorbeigeführt. Auf diese Weise ergibt sich eine besonders lange interne Dichtstrecke 61: zum einen dichtet der Dichtwulst in der Nut 35 zwischen dem äußeren Kragen 32 und der Gehäuseinnenwand 10 ab. Außerdem kann auch der an der Kante 34 entlanggeführte und zwischen Kante 34 und Gehäuseinnenwand 10 angeordnete bzw. zusammengedrückte Abschnitt der "L"-Form zur internen Abdichtung beitragen.

Der als Dichtwulst ausgebildete zweite Dichtungsbereich 60 kann dabei ohne größere Modifikation an der Konstruktion von Gehäuse 2 und/oder Filtereinsatz 20 eine dort üblicherweise vorhandene erste Filtereinsatzdichtung 71 ersetzen.

Bei der Montage des Flüssigkeitsfilters 1 kann z.B. das Volumenausgleichs-Element 40 zunächst z.B. durch die erste Öffnung 26 hindurch in den Filtereinsatz 20 eingesteckt bzw. eingeschoben werden und anschließend kann der Filtereinsatz 20 in das Gehäuse 2 gesteckt werden. Eine Demontage kann in der umgekehrten Reihenfolge ablaufen. Dabei kann je nach Zustand des Volumenausgleichs-Elements 40 dieses wiederverwendet werden.

Der Zentralkörper 41 ist im dargestellten Ausführungsbeispiel hohl ausgebildet bzw. er umschließt einen röhrenförmigen bzw. becherartigen Hohlraum, den Zentralkörper-Innenraum 42. Der Zentralkörper 41 bzw. das Volumenausgleichs-Element 40 ist so im Flüssigkeitsfilter 1 angeordnet ist, dass der Hohlraum nicht mit Flüssigkeit gefüllt werden kann. Er ist z.B. mit einem Gas, z.B. Luft gefüllt. In einer anderen Ausführungsform kann der Zentralkörper-Innenraum 42 auch mit einem leicht komprimierbaren Elastomer oder einem leicht komprimierbaren Schaumstoff ausgefüllt sein und rundum geschlossen sein.

Der Filtereinsatz 20 ist hier hohlzylindrisch ausgebildet und wird hier von außen nach innen radial durchströmt. Auch die umgekehrte Durchströmungsrichtung ist denkbar. Ebenso ist ein axial durchströmbarer Filtereinsatz 20 denkbar. Das Filtermedium 23 kann z.B. sterngefaltet sein und aus einem Filterpapier hergestellt sein. Es kann auch beschichtet sein. Auch sind Ausführungsformen denkbar, in denen das Filtermedium 23 z.B. aus Meltblown oder anderen Kunstfasern hergestellt ist. Das Filtermedium 23 ist dazu eingerichtet, Partikel und/oder Schmutz aus der Flüssigkeit abzuscheiden, z.B. Partikel größer als 20µm, bevorzugt größer als 10µm und ganz besonders bevorzugt Partikel größer als 1µm.

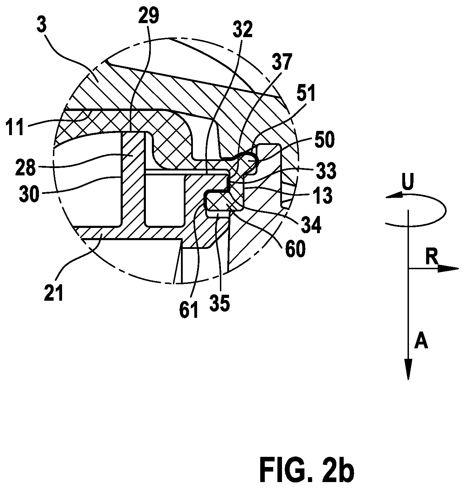

**Figur 2b** zeigt ein Detail der inneren Abdichtung und der äußeren Abdichtung des Flüssigkeitsfilters 1 aus **Fig. 2a****.** Die interne Dichtstrecke 61 ist hier durch eine dickere Linie dargestellt. Der im Bereich des Rücksprungs 13 der Gehäuse-Innenwand 10 verlaufende Teil des zweiten Dichtbereichs 60 kann ebenfalls zur internen Dichtstrecke 61 beitragen.

Weiterhin ist eine externe Dichtstrecke 51 des ersten Dichtungsbereichs 50 als etwas dickere Linie dargestellt. Sie zeigt, wo bzw. wie die Abdichtung des Inneren 6 des Gehäuses 2 gegenüber dem Außenraum 9 bewirkt wird.

In der Detailansicht von Fig. 2b verläuft der waagerechte Abschnitt des Volumenausgleichselements 40 links vom ersten Dichtbereich 50 oberhalb des äußeren Kragens 32 und seinem freien Ende 37 (entlang der axialen Richtung A betrachtet). Mit anderen Worten: zwischen dem oberen Ende des äußeren Kragens 32 und dem Volumenausgleichselement 40 befindet sich umlaufend ein Spalt (angedeutet durch die beiden waagerechten Linien). Es versteht sich, dass es auch Ausführungsformen geben kann, in denen das Volumenausgleichselement 40 in diesem Bereich auf dem oberen Ende des äußeren Kragens 32 aufliegt.

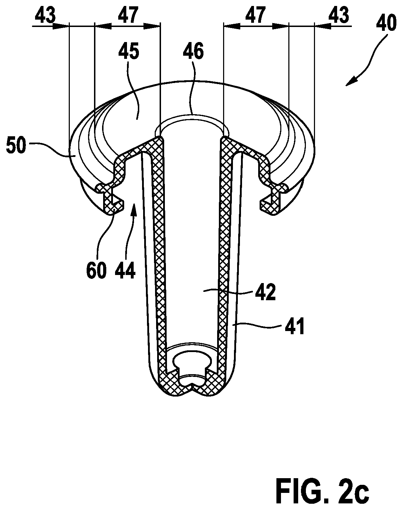

**Figur 2c** zeigt eine geschnittene perspektivische Ansicht des Volumenausgleichs-Elements 40 aus **Fig. 2a****.** Es ist gut zu erkennen, dass das Volumenausgleichs-Element 40 im Wesentlichen rotationssymmetrisch gestaltet ist. Weiterhin ist am Ende des Verbindungsabschnitts 47 ein axialer Versatz erkennbar. Der innere Kragen 28 wird von diesem axialen Versatz übergriffen. Dadurch kann das Volumenausgleichs-Element 40 präzise in seiner radialen Soll-Position montiert werden und wird dort auch im Wesentlichen ortsfest gehaltert, z.B. durch ein geringes Übermaß des Durchmessers des inneren Kragens 28 gegenüber dem Ende des Verbindungsabschnitts 47.

Das Volumenausgleichselement 40 weist hier einen hohlen Zentralkörper 41 auf. Dieser kann jedoch in einer anderen Ausgestaltung auch gefüllt sein, z.B. mit einem gut komprimierbaren Schaumstoff.

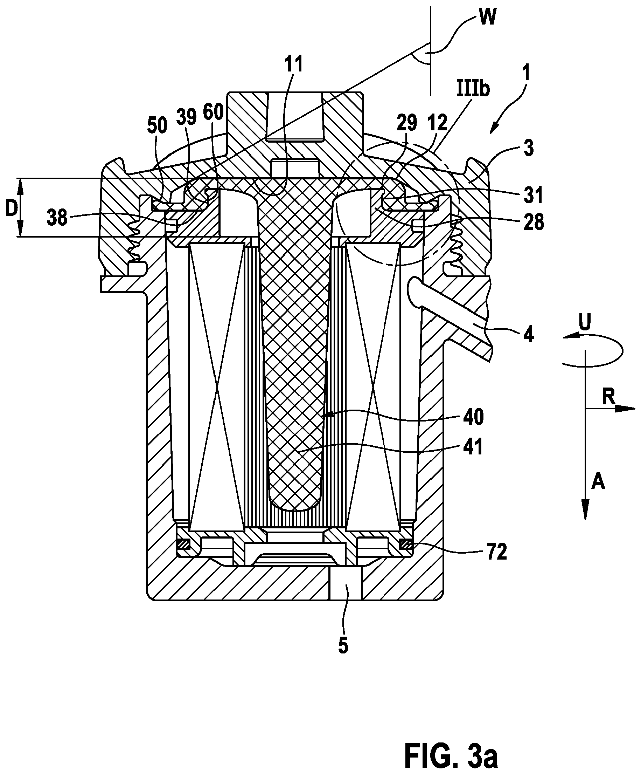

**Figur 3a** zeigt einen schematischen Querschnitt eines weiteren Flüssigkeitsfilters 1.

Der Flüssigkeitsfilter 1 aus **Figur 3a** unterscheidet sich von demjenigen aus **Fig. 2a** vor allem durch die Lage des zweiten Dichtungsbereichs 60 am Volumenausgleichs-Element 40 und damit durch die Stelle, an welcher die interne Abdichtung im Flüssigkeitsfilter 1 bewirkt wird. Außerdem ist das Volumenausgleichselement 40 hier an der Stelle des Zentralkörpers durch ein sehr gut komprimierbares Material ausgefüllt bzw. gebildet. Dieses kann z.B. ein elastisch reversibel verformbarer Schaumstoff oder ein Elastomer, etc. sein.

In dem in **Fig. 3a** dargestellten Flüssigkeitsfilter 1 ist der zweite Dichtungsbereich 60 nicht mehr fast unmittelbar benachbart etwas unterhalb des ersten Dichtungsbereichs 50 angeordnet wie in **Fig. 2a****.** Vielmehr ist der zweite Dichtungsbereich am unteren Ende des axialen Versatzes am Übergang von Verbindungsbereich 47 und äußerem Endbereich 43 angeordnet (siehe dazu **Fig. 2a****).** Der zweite Dichtungsbereich 60 kann z.B. als Dichtwulst ausgebildet sein, also als eine Art Verdickung. Er ist hier in axialer Richtung A und/oder in radialer Richtung R zwischen einer Deckel-Innenwand 11 und einer Außenwand 31 des inneren Kragens 28 zusammengedrückt bzw. zusammengepresst bzw. verformt. Der Deckel 3 verläuft in dieser beispielhaften Ausführungsform in einer Kontaktzone 12 mit dem zweiten Dichtungsbereich 60 lediglich beispielhaft schräg zur axialen Richtung A, z.B. in einem Winkel W zur axialen Richtung zwischen 20° und 70°, hier mit einem Winkel von ca. 45%.

Dabei kann die Außenwand 31 des inneren Kragens 28 einen kleinen, z.B. nutförmigen, Rücksprung 39 aufweisen, in den der zweite Dichtungsbereich 60 aufgenommen ist und der die Kontaktzone bzw. Dichtungsfläche vergrößert sowie eine präzise Positionierung des zweiten Dichtungsbereichs 60 an dem inneren Kragen 28 ermöglicht.

Alternativ oder zusätzlich kann an der Außenwand 31 des inneren Kragens 28 eine Art Schulter 38 ausgebildet sein, die radial nach außen abragt und auf der der zweite Dichtungsbereich 60 zumindest abschnittsweise aufliegen kann. Anstelle einer Schulter 38 kann der innere Kragen 28 auch eine andere Art Auflagefläche aufweisen.

Die Kontaktzone bzw. Dichtzone bzw. interne Dichtstrecke 61 für die interne Abdichtung wird vor allem zwischen der Außenwand 31 des inneren Kragens 28 und dem zweiten Dichtungsbereich 60 hergestellt bzw. zwischen dem zweiten Dichtungsbereich 60 und dem Deckel 3.

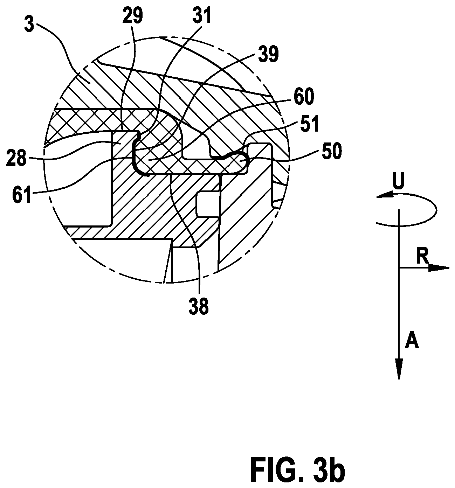

**Figur 3b** zeigt ein Detail der inneren Abdichtung und der äußeren Abdichtung des Flüssigkeitsfilters 1 aus **Fig. 3a****.** Interne Dichtstrecke 61 und äußere bzw. externe Dichtstrecke 51 sind wieder durch eine dickere Linie dargestellt.

Es ist zu erkennen, dass hier der im Ausführungsbeispiel der **Figs. 2a bis 2c** ausgesparte Bereich zwischen dem äußeren Kragen 32 und dem inneren Kragen 28 fehlt. Vielmehr ist in **Fig. 3b** im Bereich rechts vom inneren Kragen 28 die Schulter 38 in der Art eines Plateaus ausgebildet. Auf dieser Schulter 38 liegt der waagerechte Abschnitt des Volumenausgleichselements 40 links vom ersten Dichtungsbereich 50 auf. Grundsätzlich könnte sich hier aber auch wie in den **Figs. 2a** **und** **2b** ein Spalt befinden, so dass das Volumenausgleiselement 40 nicht aufliegt. Auch kann es Ausführungsbeispiele geben, in denen wie in den **Figs. 2a** **und** **2b** eine Aussparung zwischen dem inneren Kragen 28 und dem äußeren Kragen 32 gibt.

Weiterhin ist der, z.B. nutförmige, Rücksprung 39 gut zu erkennen. Das Zusammenwirken der Wandung des Rücksprungs 39 bzw. dieser Nut mit der Verdickung bzw. dem Dichtwulst des Volumenausgleichselements 40 im zweiten Dichtungsbereich 60 bewirkt eine besonders gute interne Abdichtung. Zudem ist dadurch die interne Dichtstrecke 61 verlängert.

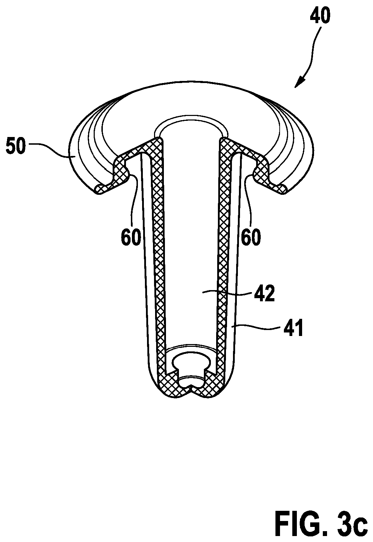

**Figur 3c** zeigt eine geschnittene perspektivische Ansicht eines Volumenausgleichs-Elements für den Flüssigkeitsfilter aus **Fig. 3a****.** Das in **Fig. 3c** gezeigte Volumenausgleichselement 40 ist nun jedoch wieder wie das aus **Fig. 2c** mit einem hohlen Zentralkörper-Innenraum 42 ausgebildet (statt mit gefülltem Zentralkörper 41 wie in **Fig. 3a****).** Der als Dichtwulst ausgebildete zweite Dichtungsbereich 60 an der Unterseite des Volumenausgleichs-Elements 40 am Übergang des Verbindungsbereichs 47 zum äußeren Endbereich 43 ist gut zu erkennen.

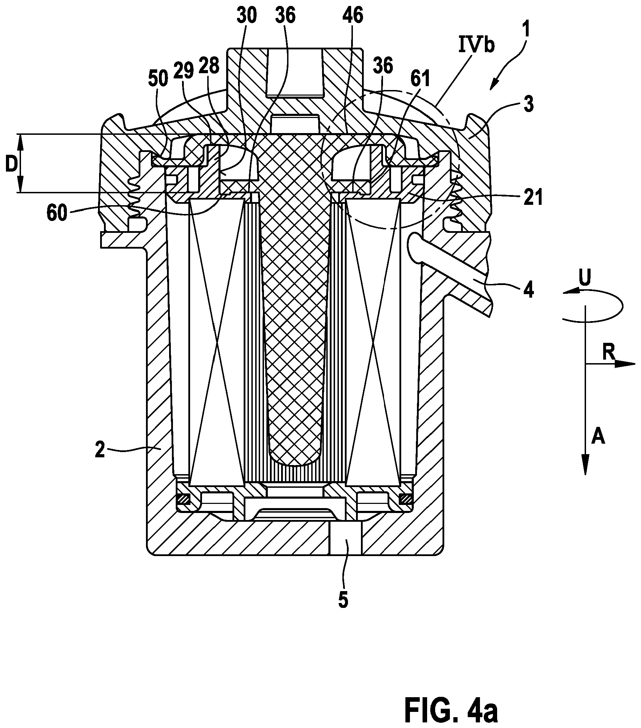

**Figur 4a** zeigt einen schematischen Querschnitt eines weiteren Flüssigkeitsfilters 1.

Der Flüssigkeitsfilter 1 aus **Figur 4a** unterscheidet sich von denjenigen aus den **Figs. 2a** und **3a** vor allem durch die Lage des zweiten Dichtungsbereichs 60 am Volumenausgleichs-Element 40 und damit durch die Stelle, an welcher die interne Abdichtung im Flüssigkeitsfilter 1 bewirkt wird. Außerdem ist das Volumenausgleichselement 40 hier an der Stelle des Zentralkörpers durch ein sehr gut komprimierbares Material ausgefüllt bzw. gebildet (siehe auch **Fig. 3a****).** Dieses kann z.B. ein elastisch reversibel verformbarer Schaumstoff oder ein Elastomer, etc. sein.

In dem in **Fig. 4a** dargestellten Flüssigkeitsfilter 1 ragt der zweite Dichtungsbereich 60 von dem Zentralkörper 41 des Volumenausgleichs-Elements 40 radial nach außen ab, wobei der zweite Dichtungsbereich 60 von einem dem Deckel 3 zugewandten oberen Ende 46 des Zentralkörpers 41 in axialer Richtung A beabstandet ist. Der zweite Dichtungsbereich 60 ist gegen eine Innenwand 30 des inneren Kragens 28 und/oder gegen eine dem Deckel 3 zugewandte Oberseite 34 der ersten Endkappe 21 gedrückt bzw. gepresst.

Der erste Dichtungsbereich 50 befindet sich an einem anderen vom Zentralkörper 41 abragenden Element bzw. Ast bzw. an einer anderen abragenden Scheibe als der zweite Dichtungsbereich 60. Hier ist der erste Dichtungsbereich 50 an einem am oberen Ende 46 abragenden Ast bzw. Element bzw. Scheibe des Zentralkörpers angeordnet.

Der zweite Dichtungsbereich 60 ist hier um ca. wenigstens 80% bis 90% eines Abstands D zwischen dem Deckel 3 und der ersten Endkappe 21 von dem oberen Ende 46 beabstandet, zumindest jedoch um 30%, bevorzugt zumindest um 50% und besonders bevorzugt um mindestens 75%. Ganz besonders bevorzugt ist der zweite Dichtungsbereich 60 zwischen 95% und 105% des Abstands D von dem oberen Ende 46 beabstandet, z.B. 100%. Dann ergibt sich eine besonders lange interne Dichtstrecke 61.

Der zweite Dichtungsbereich 60 überdeckt hier die erste Öffnung 26 vollständig. Als Dichtzone bzw. Kontaktzone bzw. interne Dichtstrecke 61 für die interne Abdichtung des Flüssigkeitsfilters ergibt sich hier sowohl eine radiale Abdichtung zwischen den radialen äußeren Enden des zweiten Dichtungsbereichs 60 und der Innenwand 30 des inneren Kragens 28. Gleichzeitig kann mittels des auf das obere Ende 46 des Volumenausgleichs-Elements 40 ausgeübten axialen Druck des Deckels 3 auch eine axiale Dichtung bzw. interne Dichtstrecke 61 erzeugt werden zwischen einer hier flächigen Unterseite des zweiten Dichtungsbereichs 60 und der Oberseite 36 der ersten Endkappe 21.

Durch den nach radial außen abragenden und die erste Öffnung 26 überdeckenden zweiten Dichtungsbereich 60 wird auch eine präzise und einfache Montage des Volumenausgleichs-Elements 40 im Filtereinsatz 20 ermöglicht. Sobald das Volumenausgleichs-Element 40 mit seinem zweiten Dichtungsbereich 60 auf der Oberseite 36 der ersten Endkappe 21 anliegt ist eine weitere axiale Verlagerung nicht mehr möglich und ein Monteur erkennt, dass die Zielposition erreicht ist.

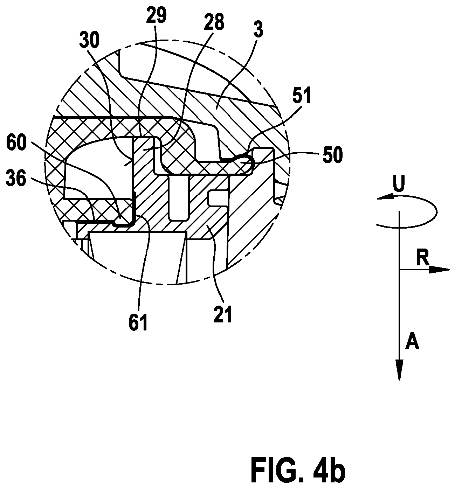

**Figur 4b** zeigt ein Detail der inneren Abdichtung und der äußeren Abdichtung des Flüssigkeitsfilters 1 aus **Fig. 4a****.** Interne Dichtstrecke 61 und äußere bzw. externe Dichtstrecke 51 sind wieder durch eine dickere Linie dargestellt.

Es ist zu erkennen, dass hier der im Ausführungsbeispiel der **Figs. 2a bis 2c** ausgesparte Bereich zwischen dem äußeren Kragen 32 und dem inneren Kragen 31 hier vorhanden ist. Jedoch liegt der waagerechte Abschnitt des Volumenausgleichselements 40 links vom ersten Dichtungsbereich 50 auf dem oberen Ende des äußeren Kragens 32 auf. Grundsätzlich könnte sich hier aber auch wie in den **Figs. 2a** **und** **2b** ein Spalt befinden, so dass das Volumenausgleiselement 40 nicht aufliegt.

Der innere Kragen 28 weist an seiner radial äußeren Seite eine kurze (ungefähr waagerecht verlaufende) Schulter 38 auf, die jedoch nicht bis zum äußeren Kragen 32 durchgeht.

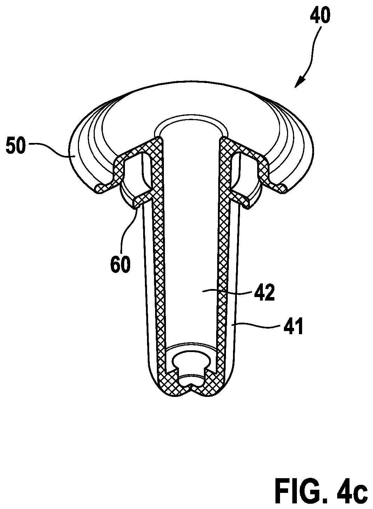

**Figur 4c** zeigt eine geschnittene perspektivische Ansicht eines Volumenausgleichs-Elements für den Flüssigkeitsfilter 1 aus **Fig. 4a****.** Das in **Fig. 4c** gezeigte Volumenausgleichselement 40 ist nun jedoch wieder wie das aus **Fig. 2c** mit einem hohlen Zentralkörper-Innenraum 42 ausgebildet (statt mit gefülltem Zentralkörper 41 wie in **Fig. 4a****).** Die flächige Gestalt des zweiten Dichtungsbereichs 60 mit dem am radialen freien Ende angeordneten Dichtungswulst ist gut zu erkennen.

Abschließend sei angemerkt, dass das Volumenausgleichs-Element 40 und der Flüssigkeitsfilter 1 z.B. für den Einsatz in Wasserfiltern oder in Filtern für wässrige Lösungen, z.B. wässrige Harnstofflösungen für DENOX-Anwendungen im Automobilbereich verwendbar sind. Jedoch ist grundsätzlich auch eine Verwendung in Diesel, Öl- und Benzinfiltern denkbar.

## Patentansprüche

1. Flüssigkeitsfilter, aufweisend:
-- ein Gehäuse (2) mit einem Deckel (3);
-- einen Zulauf (4) für eine Flüssigkeit und einen Ablauf (5) für die Flüssigkeit;
-- einen Filtereinsatz (20), der in einem Inneren (6) des Gehäuses (2) angeordnet ist und der eine dem Deckel (3) zugewandte erste Endkappe (21), eine zweite Endkappe (22) und ein in einer axialen Richtung (A) zwischen den beiden Endkappen (21, 22) angeordnetes Filtermedium (23) aufweist, wobei der Filtereinsatz (20) eine Reinseite (7) von einer Rohseite (8) trennt;
-- ein Volumenausgleichs-Element (40) mit einem elastisch-reversibel komprimierbaren Zentralkörper (41), der einen Zentralkörper-Innenraum (42) aufweist,
wobei der Zentralkörper-Innenraum (42) in einem nicht-komprimierten Zustand ein Anfangsvolumen umschließt und in einem komprimierten Zustand ein Endvolumen umschließt, wobei die Volumendifferenz zwischen Endvolumen und Anfangsvolumen zumindest 35% einer maximalen Volumenänderung der im Flüssigkeitsfilter (1) befindlichen Flüssigkeit im Temperaturbereich zwischen +90°C und -40°C bei Normaldruck entspricht;
wobei das Volumenausgleichs-Element (40) einen den Zentralkörper (41) umlaufenden ersten Dichtungsbereich (50) aufweist,
wobei der erste Dichtungsbereich (50) ausgebildet ist, im vollständig montierten Zustand des Flüssigkeitsfilters (1) mit dem Gehäuse (2) und dem Deckel (2) derart zusammenzuwirken, dass das Innere (6) des Gehäuses fluiddicht von einem Außenraum (9) des Flüssigkeitsfilters (1) abgedichtet ist, wobei das Volumenausgleiches-Element (40) einen den Zentralkörper (41) umlaufenden zweiten Dichtungsbereich (60) aufweist,
wobei der zweite Dichtungsbereich (60) ausgebildet ist, einen fluidischen Kurzschluss zwischen der Reinseite (7) und der Rohseite (8) zu verhindern, insbesondere im Bereich des Deckels (3).

2. Flüssigkeitsfilter nach dem vorhergehenden Anspruch,
wobei das Volumenausgleichs-Element (30) einstückig ausgebildet ist.

3. Flüssigkeitsfilter nach einem der vorhergehenden Ansprüche,
wobei das Volumenausgleichs-Element (30) als vom Filtereinsatz (20) separates Element ausgebildet ist.

4. Flüssigkeitsfilter nach einem der vorhergehenden Ansprüche,
wobei das Filtermedium (23) einen Innenraum (25) umschließt,
wobei der Zentralkörper (41) in den Innenraum (25) des Filtermediums (23) hineinragt,
insbesondere entlang wenigstens 50% oder wenigstens 75% einer Länge (L) des Innenraums (25) entlang der axialen Richtung (A).

5. Flüssigkeitsfilter nach dem vorhergehenden Anspruch,
wobei die erste Endkappe (21) eine kanalartige erste Öffnung (26) aufweist, wobei der Zentralkörper (41) durch die erste Öffnung (26) hindurch in den Innenraum (25) des Filtermediums (23) hineinragt.

6. Flüssigkeitsfilter nach einem der vorhergehenden Ansprüche,
wobei die erste Endkappe (21) einen in Richtung des Deckels (3) abragenden inneren Kragen (28) aufweist,
wobei das Volumenausgleichs-Element (40) in axialer Richtung (A) betrachtet zumindest abschnittsweise zwischen einem freien Ende (29) des inneren Kragens (28) und dem Deckel (3) angeordnet ist,
insbesondere eingespannt ist.

7. Flüssigkeitsfilter nach einem der vorhergehenden Ansprüche,
wobei der erste Dichtungsbereich (50) in einer radialen Richtung (R) betrachtet in einem äußeren Endabschnitt (43) des Volumenausgleichs-Elements (40) angeordnet ist,
wobei der erste Dichtungsbereich (50) im montierten Zustand des Flüssigkeitsfilters (1) in axialer Richtung (A) und/oder in radialer Richtung (R) zwischen dem Gehäuse (2) und dem Deckel (3) zusammengedrückt ist.

8. Flüssigkeitsfilter nach einem der vorhergehenden Ansprüche,
wobei die erste Endkappe (21) einen in Richtung des Deckels (3) abragenden äußeren Kragen (32) aufweist,
wobei der zweite Dichtungsbereich (60) auf einer vom Deckel (3) abgewandten unteren Seite (44) des Volumenausgleichs-Elements (40) angeordnet ist,
wobei der zweite Dichtungsbereich (60) im montierten Zustand des Flüssigkeitsfilters (1) in axialer Richtung (A) und/oder in radialer Richtung (R) zwischen einer Gehäuse-Innenwand (10) und einer Außenwand (33) des äußeren Kragens (32) zusammengedrückt ist.

9. Flüssigkeitsfilter nach Anspruch 6 oder nach den Ansprüchen 6 und 7,
wobei der zweite Dichtungsbereich (60) im montierten Zustand des Flüssigkeitsfilters (1) in axialer Richtung (A) und/oder in radialer Richtung (R) zwischen einer Deckel-Innenwand (11) und einer Außenwand (31) des inneren Kragens (28) zusammengedrückt ist,
wobei der Deckel (3) in einer Kontaktzone (12) mit dem zweiten Dichtungsbereich (60) insbesondere schräg zur axialen Richtung (A) verläuft, vorzugsweise in einem Winkel (W) zur axialen Richtung zwischen 20° und 70°.

10. Flüssigkeitsfilter nach Anspruch 6 oder nach den Ansprüchen 6 und 7, wobei der zweite Dichtungsbereich (60) von dem Zentralkörper (41) des Volumenausgleichs-Elements (40) radial nach außen abragt,
wobei der zweite Dichtungsbereich (60) von einem dem Deckel (3) zugewandten oberen Ende (46) des Zentralkörpers (41) in axialer Richtung (A) beabstandet ist, insbesondere um wenigstens 75% eines Abstands (D) zwischen dem Deckel (3) und der ersten Endkappe (21),
wobei der zweite Dichtungsbereich (60) im montierten Zustand des Flüssigkeitsfilters (1) gegen eine Innenwand (30) des inneren Kragens (28) und/oder gegen eine dem Deckel (3) zugewandte Oberseite (34) der ersten Endkappe (21) gedrückt ist.

11. Flüssigkeitsfilter nach einem der vorhergehenden Ansprüche,
wobei der erste Dichtungsbereich (50) als elastische Dichtlippe oder elastischer Dichtwulst ausgebildet ist
und/oder
wobei der zweite Dichtungsbereich (60) als elastische Dichtlippe oder elastischer Dichtwulst ausgebildet ist.

12. Volumenausgleichs-Element, eingerichtet zur Montage in einem Flüssigkeitsfilter, der eine Reinseite (7) von einer Rohseite (8) trennt,
wobei das Volumenausgleichs-Element (40) einen elastisch-reversibel komprimierbaren Zentralkörper (41) mit einem Zentralkörper-Innenraum (42) aufweist,
wobei der Zentralkörper-Innenraum (42) in einem nicht-komprimierten Zustand ein Anfangsvolumen umschließt und in einem komprimierten Zustand ein Endvolumen umschließt, wobei das Anfangsvolumen wenigstens um 20% größer ist als das Endvolumen oder wenigstens um 30% größer ist als das Endvolumen,
wobei das Volumenausgleichs-Element (40) einen den Zentralkörper (41) umlaufenden ersten Dichtungsbereich (50) aufweist,
wobei der erste Dichtungsbereich (50) ausgebildet ist, ein Inneres (6) des Flüssigkeitsfilters (1) fluiddicht von einem Außenraum (9) des Flüssigkeitsfilters (1) abzudichten,
wobei das Volumenausgleiches-Element (40) einen den Zentralkörper (41) umlaufenden zweiten Dichtungsbereich (60) aufweist,
wobei der zweite Dichtungsbereich (60) ausgebildet ist einen fluidischen Kurzschluss zwischen der Reinseite (7) und der Rohseite (8) zu verhindern.

## Claims

1. Liquid filter, having:
- - a housing (2) with a cover (3);
- - an inlet (4) for a liquid and a drain (5) for the liquid;
- - a filter insert (20) which is arranged in an interior (6) of the housing (2) and which has a first end cap (21) facing the cover (3), a second end cap (22), and a filter medium (23) arranged in an axial direction (A) between the two end caps (21, 22), wherein the filter insert (20) separates a clean side (7) from a raw side (8);
- - a volume compensation element (40) with an elastically-reversibly compressible central body (41) having a central body interior (42),
wherein, in a non-compressed state, the central body interior (42) encloses an initial volume and, in a compressed state, encloses a final volume, where the volume difference between the final volume and the initial volume corresponds to at least 35% of a maximum volume change of the liquid located in the liquid filter (1) in the temperature range between +90°C and -40°C at normal pressure;
wherein the volume compensation element (40) has a first seal region (50) surrounding the central body (41),
wherein the first seal region (50) is formed to interact with the housing (2) and the cover (2) in the fully assembled state of the liquid filter (1) in such a way that the interior (6) of the housing is sealed in a fluid-tight manner from an outer space (9) of the liquid filter (1), wherein the volume compensation element (40) has a second seal region (60) surrounding the central body (41),
wherein the second seal region (60) is formed to prevent a fluidic short circuit between the clean side (7) and the raw side (8), in particular in the region of the cover (3).

2. Liquid filter according to the preceding claim,
wherein the volume compensation element (30) is formed in one piece.

3. Liquid filter according to either of the preceding claims,
wherein the volume compensation element (30) is formed as a separate element from the filter insert (20).

4. Liquid filter according to one of the preceding claims,
wherein the filter medium (23) encloses an interior (25),
wherein the central body (41) extends into the interior (25) of the filter medium (23),
in particular along at least 50% or at least 75% of a length (L) of the interior (25) along the axial direction (A).

5. Liquid filter according to the preceding claim,
wherein the first end cap (21) has a channel-like first opening (26),
wherein the central body (41) protrudes through the first opening (26) into the interior (25) of the filter insert (23).

6. Liquid filter according to one of the preceding claims,
wherein the first end cap (21) has an inner collar (28) which protrudes in the direction of the cover (3),
wherein the volume compensation element (40) is arranged, in particular clamped in, as viewed in the axial direction (A) at least in sections between a free end (29) of the inner collar (28) and the cover (3).

7. Liquid filter according to one of the preceding claims,
wherein the first seal region (50) is arranged, as viewed in a radial direction (R), in an outer end portion (43) of the volume compensation element (40),
wherein the first seal region (50), in the assembled state of the liquid filter (1), is compressed in the axial direction (A) and/or in the radial direction (R) between the housing (2) and the cover (3).

8. Liquid filter according to one of the preceding claims,
wherein the first end cap (21) has an outer collar (32) which protrudes in the direction of the cover (3),
wherein the second seal region (60) is arranged on a lower side (44) of the volume compensation element (40) facing away from the cover (3),
wherein the second seal region (60), in the assembled state of the liquid filter (1), is compressed in the axial direction (A) and/or in the radial direction (R) between a housing inner wall (10) and an outer wall (33) of the outer collar (32).

9. Liquid filter according to Claim 6 or according to Claims 6 and 7,
wherein the second seal region (60), in the installed state of the liquid filter (1), is compressed in the axial direction (A) and/or in the radial direction (R) between a cover inner wall (11) and an outer wall (31) of the inner collar (28),
wherein the cover (3) runs, in a contact zone (12) with the second seal region (60), in particular obliquely with respect to the axial direction (A), preferably at an angle (W) with respect to the axial direction between 20° and 70°.

10. Liquid filter according to Claim 6 or according to Claims 6 and 7,
wherein the second seal region (60) protrudes radially outwards from the central body (41) of the volume compensation element (40),
wherein the second seal region (60) is spaced apart in the axial direction (A) from a top end (46) of the central body (41) facing the cover (3), in particular by at least 75% of a distance (D) between the cover (3) and the first end cap (21),
wherein the second seal region (60), in the installed state of the liquid filter (1), is pressed against an inner wall (30) of the inner collar (28) and/or against a top side (34) of the first end cap (21) facing the cover (3).

11. Liquid filter according to one of the preceding claims,
wherein the first seal region (50) is formed as an elastic sealing lip or an elastic sealing bead,
and/or
wherein the second seal region (60) is formed as an elastic sealing lip or an elastic sealing bead.

12. Volume compensation element, configured for assembling in a liquid filter which separates a clean side (7) from a raw side (8),
wherein the volume compensation element (40) has an elastically-reversibly compressible central body (41) with a central body interior (42),
wherein, in a non-compressed state, the central body interior (42) encloses an initial volume and, in a compressed state, encloses a final volume, wherein the initial volume is at least 20% greater than the final volume or at least 30% greater than the final volume,
wherein the volume compensation element (40) has a first seal region (50) surrounding the central body (41),
wherein the first seal region (50) is formed to seal an interior (6) of the liquid filter (1) in a fluid-tight manner from an outer space (9) of the liquid filter (1),
wherein the volume compensation element (40) has a second seal region (60) surrounding the central body (41),
wherein the second seal region (60) is formed to prevent a fluidic short circuit between the clean side (7) and the raw side (8).

## Revendications

1. Filtre à liquide, présentant :
-- un boîtier (2) avec un couvercle (3) ;
-- une entrée (4) pour un liquide et une sortie (5) pour le liquide ;
-- un insert filtrant (20) qui est agencé dans un intérieur (6) du boîtier (2) et qui présente un premier capuchon d'extrémité (21) tourné vers le couvercle (3), un deuxième capuchon d'extrémité (22) et un milieu filtrant (23) agencé dans une direction axiale (A) entre les deux capuchons d'extrémité (21, 22), l'insert filtrant (20) séparant un côté pur (7) d'un côté brut (8) ;
-- un élément de compensation de volume (40) avec un corps central (41) compressible de manière élastique et réversible, qui présente un espace intérieur de corps central (42),
l'espace intérieur de corps central (42) renfermant un volume initial dans un état non comprimé et renfermant un volume final dans un état comprimé, la différence de volume entre le volume final et le volume initial correspondant à au moins 35 % d'une variation de volume maximale du liquide se trouvant dans le filtre à liquide (1) dans la plage de température comprise entre +90 °C et - 40 °C à la pression normale ;
l'élément de compensation de volume (40) présentant une première zone d'étanchéité (50) entourant le corps central (41),
la première zone d'étanchéité (50) étant réalisée de manière à coopérer avec le boîtier (2) et le couvercle (2) lorsque le filtre à liquide (1) est complètement monté, de telle sorte que l'intérieur (6) du boîtier est rendu étanche au fluide par rapport à un espace extérieur (9) du filtre à liquide (1), l'élément de compensation de volume (40) présentant une deuxième zone d'étanchéité (60) entourant le corps central (41),
la deuxième zone d'étanchéité (60) étant réalisée pour empêcher un court-circuit fluidique entre le côté pur (7) et le côté brut (8), notamment dans la zone du couvercle (3).

2. Filtre à liquide selon la revendication précédente,
l'élément de compensation de volume (30) étant réalisé d'un seul tenant.

3. Filtre à liquide selon l'une quelconque des revendications précédentes, l'élément de compensation de volume (30) étant réalisé sous forme d'élément
séparé de l'insert filtrant (20).

4. Filtre à liquide selon l'une quelconque des revendications précédentes,
le milieu filtrant (23) entourant un espace intérieur (25),
le corps central (41) faisant saillie dans l'espace intérieur (25) du milieu filtrant (23),
notamment le long d'au moins 50 % ou d'au moins 75 % d'une longueur (L) de l'espace intérieur (25) le long de la direction axiale (A).

5. Filtre à liquide selon la revendication précédente,
le premier capuchon d'extrémité (21) présentant une première ouverture de type canal (26),
le corps central (41) faisant saillie à travers la première ouverture (26) dans l'espace intérieur (25) du milieu filtrant (23).

6. Filtre à liquide selon l'une quelconque des revendications précédentes,
le premier capuchon d'extrémité (21) présentant une collerette intérieure (28) faisant saillie en direction du couvercle (3),
l'élément de compensation de volume (40) étant agencé, vu dans la direction axiale (A), au moins par sections entre une extrémité libre (29) de la collerette intérieure (28) et le couvercle (3),
notamment étant serré.

7. Filtre à liquide selon l'une quelconque des revendications précédentes,
la première zone d'étanchéité (50) étant agencée dans une section d'extrémité extérieure (43) de l'élément d'équilibrage de volume (40), vu dans une direction radiale (R),
la première zone d'étanchéité (50) étant comprimée dans la direction axiale (A) et/ou dans la direction radiale (R) entre le boîtier (2) et le couvercle (3) à l'état monté du filtre à liquide (1).

8. Filtre à liquide selon l'une quelconque des revendications précédentes,
le premier capuchon d'extrémité (21) présentant une collerette extérieure (32) faisant saillie en direction du couvercle (3),
la deuxième zone d'étanchéité (60) étant agencée sur un côté inférieur (44) de l'élément de compensation de volume (40) qui est détourné du couvercle (3),
à l'état monté du filtre à liquide (1), la deuxième zone d'étanchéité (60) étant comprimée dans la direction axiale (A) et/ou dans la direction radiale (R) entre une paroi intérieure de boîtier (10) et une paroi extérieure (33) de la collerette extérieure (32).

9. Filtre à liquide selon la revendication 6 ou selon les revendications 6 et 7,
à l'état monté du filtre à liquide (1), la deuxième zone d'étanchéité (60) étant comprimée dans la direction axiale (A) et/ou dans la direction radiale (R) entre une paroi intérieure de boîtier (11) et une paroi extérieure (31) de la collerette intérieure (28),
le couvercle (3) s'étendant dans une zone de contact (12) avec la deuxième zone d'étanchéité (60) notamment en oblique par rapport à la direction axiale (A), de préférence selon un angle (W) par rapport à la direction axiale compris entre 20° et 70°.

10. Filtre à liquide selon la revendication 6 ou selon les revendications 6 et 7,
la deuxième zone d'étanchéité (60) faisant saillie radialement vers l'extérieur à partir du corps central (41) de l'élément d'équilibrage de volume (40),
la deuxième zone d'étanchéité (60) étant espacée dans la direction axiale (A) d'une extrémité supérieure (46) du corps central (41) tournée vers le couvercle (3), notamment d'au moins 75 % d'une distance (D) entre le couvercle (3) et le premier capuchon d'extrémité (21),
la deuxième zone d'étanchéité (60) étant pressée, à l'état monté du filtre à liquide (1), contre une paroi intérieure (30) de la collerette intérieure (28) et/ou contre un côté supérieur (34), tourné vers le couvercle (3), du premier capuchon d'extrémité (21).

11. Filtre à liquide selon l'une quelconque des revendications précédentes,
la première zone d'étanchéité (50) étant réalisée sous la forme d'une lèvre d'étanchéité élastique ou d'un bourrelet d'étanchéité élastique
et/ou
la deuxième zone d'étanchéité (60) étant réalisée sous la forme d'une lèvre d'étanchéité élastique ou d'un bourrelet d'étanchéité élastique.

12. Élément de compensation de volume, adapté pour être monté dans un filtre à liquide, qui sépare un côté pur (7) d'un côté brut (8),
l'élément de compensation de volume (40) présentant un corps central (41) compressible de manière élastique et réversible avec un espace intérieur de corps central (42),
l'espace intérieur de corps central (42) renfermant un volume initial dans un état non comprimé et renfermant un volume final dans un état comprimé, le volume initial étant supérieur d'au moins 20 % au volume final ou étant supérieur d'au moins 30 % au volume final,
l'élément de compensation de volume (40) présentant une première zone d'étanchéité (50) entourant le corps central (41),
la première zone d'étanchéité (50) étant réalisée pour rendre étanche au fluide un intérieur (6) du filtre à liquide (1) par rapport à un espace extérieur (9) du filtre à liquide (1),
l'élément de compensation de volume (40) présentant une deuxième zone d'étanchéité (60) entourant le corps central (41),
la deuxième zone d'étanchéité (60) étant réalisée pour empêcher un court-circuit fluidique entre le côté pur (7) et le côté brut (8).
